# FASCICULE DE BREVET EUROPEEN

(11) **EP 2 626 249 B1**
(45) Date de publication et mention de la délivrance du brevet: **22.10.2014**
(21) Numéro de dépôt: 13154478.5
(22) Date de dépôt: 07.02.2013
(51) Int. Cl.: B60R 13/08

(54) **Dispositif de recouvrement d un plancher de véhicule automobile,**
Bodenabdeckvorrichtung für Kraftfahrzeug
Device for covering a motor vehicle floor

(30) Priorité: 08.02.2012 FR 1251178
(43) Date de publication de la demande: 14.08.2013
(73) Titulaire: CENTRE D'ETUDE ET DE RECHERCHE POUR L'AUTOMOBILE (CERA), 51100 Reims (FR)
(72) Inventeur: Ribes, Stéphane, 51140 Romain (FR); Crignon, Guillaume, 51500 Sillery (FR)
(74) Mandataire: Sayettat, Julien Christian

(56) Documents cités:
- DE-A1- 2 045 277
- DE-B- 1 264 484
- FR-A1- 2 850 916
- FR-A1- 2 905 343
- US-A1- 2009 255 755

## Description

L'invention concerne un dispositif de recouvrement d'un plancher de véhicule automobile.

Il est connu, par exemple du document FR2905343, de réaliser un dispositif de recouvrement d'un plancher de véhicule automobile, ledit dispositif comprenant disposés l'un sur l'autre :
- une couche élastique de recouvrement,
- une structure en matière plastique moulée pourvue d'un plateau de réception de ladite couche de recouvrement et de moyens de piétement saillant de la face d'envers dudit plateau,
- une couche élastique de découplage destinée à être disposée contre ledit plancher, lesdits moyens de piétement reposant sur ladite couche de découplage.

On utilise de tels dispositifs notamment dans les véhicules de type monospace, en vue d'avoir un sol plat.

Par ailleurs, la mise en place d'un tel dispositif permet d'atténuer les nuisances sonores dans l'habitacle.

On peut, pour un modèle donné de véhicule, souhaiter le décliner en différents niveaux plus ou moins performants d'un point de vue de la protection acoustique.

Une façon de procéder est notamment d'augmenter l'épaisseur de la couche de recouvrement et/ou de découplage, ce qui a un impact sur l'épaisseur globale du dispositif et donc sur le volume de l'habitacle, et éventuellement sur les pièces environnantes dont on doit modifier la géométrie, ce qui va à l'encontre des impératifs de standardisation en vigueur dans l'industrie automobile.

L'invention a pour but de pallier ces inconvénients en proposant un dispositif pouvant présenter des caractéristiques de protection acoustique adaptées au niveau de gamme considéré, et ceci à épaisseur constante.

A cet effet, l'invention selon la revendication 1 propose un dispositif de recouvrement d'un plancher de véhicule automobile, ledit dispositif comprenant disposés l'un sur l'autre :
- une couche élastique de recouvrement, notamment à base de feutre ou de mousse,
- une structure en matière plastique moulée pourvue d'un plateau de réception de ladite couche de recouvrement et de moyens de piétement saillant de la face d'envers dudit plateau,
- une couche élastique de découplage destinée à être disposée contre ledit plancher, lesdits moyens de piétement reposant sur ladite couche de découplage,
ladite face d'envers étant pourvue d'un réseau de nervures saillant vers le bas, une couche poreuse d'absorption acoustique étant montée contre lesdites nervures de manière à être écartée de ladite face d'envers.

Avec l'agencement proposé, il suffit de jouer sur les caractéristiques de la couche poreuse pour adapter la protection acoustique en fonction des exigences attendues.

On dispose notamment d'une grande liberté pour faire varier l'épaisseur de la couche poreuse, dans la limite de la hauteur des moyens de piètement, ce qui n'a aucun impact sur l'épaisseur du dispositif.

Les nervures jouent un rôle d'écarteur permettant la mise en oeuvre d'une architecture « couche poreuse/ espace d'air/ paroi » qui est connue pour ses propriétés d'absorption améliorées par rapport à un agencement où ladite couche serait directement plaquée contre la face d'envers du plateau.

On notera que la couche de découplage joue en outre un rôle d'absorption acoustique.

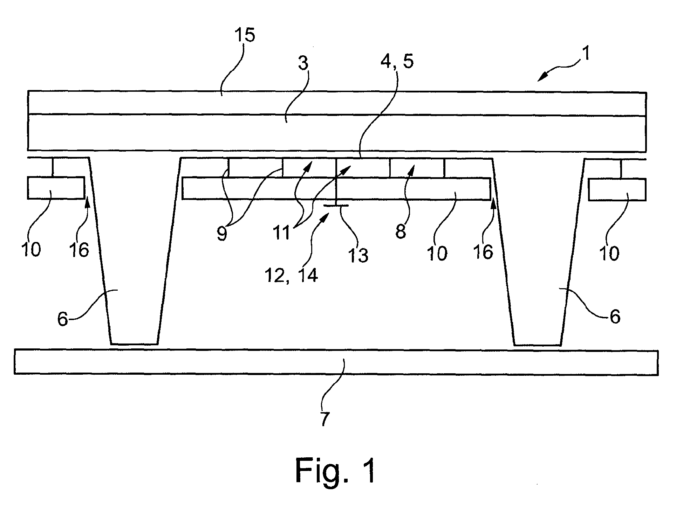

D'autres particularités et avantages de l'invention apparaîtront dans la description qui suit, faite en référence à la figure jointe qui est une vue schématique en coupe d'un dispositif selon une réalisation.

En référence à cette figure, on décrit un dispositif 1 de recouvrement d'un plancher de véhicule automobile, ledit dispositif comprenant disposés l'un sur l'autre :
- une couche élastique de recouvrement 3, notamment à base de feutre ou de mousse,
- une structure 4 en matière plastique moulée pourvue d'un plateau 5 de réception de ladite couche de recouvrement et de moyens de piétement 6 saillant de la face d'envers 8 dudit plateau,
- une couche élastique de découplage 7 destinée à être disposée contre ledit plancher, lesdits moyens de piétement reposant sur ladite couche de découplage,
ladite face d'envers étant pourvue d'un réseau de nervures 9 saillant vers le bas, une couche poreuse 10 d'absorption acoustique étant montée contre lesdites nervures de manière à être écartée de ladite face d'envers.

Selon une réalisation, les nervures 9 sont disposées en croisillons de manière à définir des cavités 11 occultées par la couche poreuse 10.

Selon la réalisation représentée, la couche poreuse 10 est montée au moyen de plots 12 pourvus d'une collerette 13 d'extrémité, lesdits plots étant issus de matière de la structure 4, lesdits plots s'accrochant à des boutonnières 14 prévues dans ladite couche.

Selon une réalisation, la couche poreuse 10 est à base de feutre.

Selon la réalisation représentée, le dispositif 1 comprend en outre une couche d'aspect 15 disposée sur la couche de recouvrement 3, ladite couche d'aspect étant notamment à base d'aiguilleté ou de moquette.

Selon la réalisation représentée, la couche poreuse 10 occupe sensiblement toute la face d'envers 8 du plateau 4, à l'exception des zones correspondant aux moyens de piètement 6.

En particulier, la couche poreuse 10 est sous forme d'une plaque pourvue d'orifices 16 de passage des moyens de piètement 6.

## Revendications

1. Dispositif (1) de recouvrement d'un plancher de véhicule automobile, ledit dispositif comprenant disposés l'un sur l'autre :
• une couche élastique de recouvrement (3), notamment à base de feutre ou de mousse,
• une structure (4) en matière plastique moulée pourvue d'un plateau (5) de réception de ladite couche de recouvrement et de moyens de piétement (6) saillant de la face d'envers (8) dudit plateau,
• une couche élastique de découplage (7) destinée à être disposée contre ledit plancher, lesdits moyens de piétement reposant sur ladite couche de découplage,
ledit dispositif étant **caractérisé en ce que** ladite face d'envers (8) dudit plateau (5) est pourvue d'un réseau de nervures (9) saillant vers le bas, une couche poreuse (10) d'absorption acoustique étant montée contre lesdites nervures de manière à être écartée de ladite face d'envers.

2. Dispositif selon la revendication 1, **caractérisé en ce que** les nervures (9) sont disposées en croisillons de manière à définir des cavités (11) occultées par la couche poreuse (10).

3. Dispositif selon la revendication 1 ou 2, **caractérisé en ce que** la couche poreuse (10) est montée au moyen de plots (12) pourvus d'une collerette (13) d'extrémité, lesdits plots étant issus de matière de la structure (4), lesdits plots s'accrochant à des boutonnières (14) prévues dans ladite couche.

4. Dispositif selon l'une quelconque des revendications 1 à 3, **caractérisé en ce que** la couche poreuse (10) est à base de feutre.

5. Dispositif selon l'une quelconque des revendications 1 à 4, **caractérisé en ce qu'il** comprend en outre une couche d'aspect (15) disposée sur la couche de recouvrement (3), ladite couche d'aspect étant notamment à base d'aiguilleté ou de moquette.

6. Dispositif selon l'une quelconque des revendications 1 à 5, **caractérisé en ce que** la couche poreuse (10) occupe sensiblement toute la face d'envers (8) du plateau (5), à l'exception des zones correspondant aux moyens de piètement (6).

7. Dispositif selon la revendication 6, **caractérisé en ce que** la couche poreuse (10) est sous forme d'une plaque pourvue d'orifices (16) de passage des moyens de piètement (6).

## Patentansprüche

1. Vorrichtung (1) zur Abdeckung eines Bodens eines Kraftfahrzeugs, wobei die Vorrichtung, übereinander angebracht, Folgendes umfasst:
- eine elastische Abdeckungsschicht (3), insbesondere auf der Grundlage von Filz oder von Schaum,
- eine Struktur (4) aus geformtem Plastikmaterial, die mit einer Platte (5) zur Aufnahme der Abdeckungsschicht versehen ist, und Gestellmittel (6), die aus der Rückseite (8) der Platte hervorragen,
- eine elastische Entkopplungsschicht (7), die ausgelegt ist, um gegen den Boden angebracht zu sein, wobei die Gestellmittel auf der Entkoppelungsschicht ruhen,
wobei die Vorrichtung **dadurch gekennzeichnet ist, dass** die Rückseite (8) der Platte (5) mit einem Netz von Rippen (9) versehen ist, die nach unten hervorspringen, wobei eine poröse Schicht (10) zur akustischen Absorption gegen die Rippen montiert ist, um von der Rückseite entfernt zu sein.

2. Vorrichtung nach Anspruch 1, **dadurch gekennzeichnet, dass** die Rippen (9) in Kreuzgriffen angeordnet sind, um Hohlräume (11) zu definieren, die von der porösen Schicht (10) verborgen sind.

3. Vorrichtung nach Anspruch 1 oder 2, **dadurch gekennzeichnet, dass** die poröse Schicht (10) mit Hilfe von Noppen (12) montiert ist, die mit einem Endflansch (13) versehen sind, wobei die Noppen aus dem Material der Struktur (4) stammen, wobei sich die Noppen an Knopflöcher (14) haken, die in der Schicht vorgesehen sind.

4. Vorrichtung nach einem der Ansprüche 1 bis 3, **dadurch gekennzeichnet, dass** die poröse Schicht (10) auf Filz basiert.

5. Vorrichtung nach einem der Ansprüche 1 bis 4, **dadurch gekennzeichnet, dass** sie außerdem eine Zierschicht (15) umfasst, die auf der Abdeckungsschicht (3) angebracht ist, wobei die Zierschicht insbesondere auf Nadelvlies oder Teppichboden basiert.

6. Vorrichtung nach einem der Ansprüche 1 bis 5, **dadurch gekennzeichnet, dass** die poröse Schicht (10) im Wesentlichen die gesamte Rückseite (8) der Platte (5) einnimmt, mit Ausnahme der Bereiche, die den Gestellmitteln (6) entsprechen.

7. Vorrichtung nach Anspruch 6, **dadurch gekennzeichnet, dass** die poröse Schicht (10) die Form einer Tafel mit Öffnungen (16) zum Durchgang der Gestellmittel (6) aufweist.

## Claims

1. Device (1) for covering a motor vehicle floor, said device comprising arranged one on the other:
- an elastic covering layer (3), in particular with a felt or foam base,
- a plastic moulded structure (4) provided with a plate (5) for receiving said covering layer and means for mounting (6) protruding from the rear face (8) of said plate,
- an elastic decoupling layer (7) intended to be arranged against said floor, said means for mounting resting on said decoupling layer,
said device **characterised in that** said rear face (8) of said plate (5) is provided with a rib network (9) projecting downwards, with a porous layer (10) of an acoustic absorption being mounted against said ribs in such a way as to be separated from said rear face.

2. Device according to claim 1, **characterised in that** the ribs (9) are arranged as a lattice in such a way as to define cavities (11) concealed by the porous layer (10).

3. Device according to claim 1 or 2, **characterised in that** the porous layer (10) is mounted by means of lugs (12) provided with an end collar (13), said lugs coming from the material of the structure (4), said lugs are attached to buttonholes (14) provided in said layer.

4. Device according to any of claims 1 to 3, **characterised in that** the porous layer (10) has a felt base.

5. Device according to any of claims 1 to 4, **characterised in that** it further comprises a decorative layer (15) arranged on the covering layer (3), said decorative layer having in particular a needle-punched or carpet base.

6. Device according to any of claims 1 to 5, **characterised in that** the porous layer (10) substantially occupies the entire rear face (8) of the plate (5), except for the zones corresponding to the means for mounting (6).

7. Device according to claim 6, **characterised in that** the porous layer (10) has the form of a plate provided with orifices (16) for passing the means for mounting (6).
